# EUROPÄISCHE PATENTANMELDUNG

(11) **EP 2 157 053 A1**
(43) Veröffentlichungstag der Anmeldung: **24.02.2010**
(21) Anmeldenummer: 09009466.5
(22) Anmeldetag: 22.07.2009
(51) Int. Cl.: C01G 9/02, C09C 1/04

(54) **Zinkoxid-Partikel, Zinkoxid-Pulver und Verwendung dieser**

(30) Priorität: 30.07.2008 DE 102008035524
(71) Anmelder: IBU-tec advanced materials AG, 99425 Weimar (DE)
(72) Erfinder: Leidolph, Lars, 99084 Erfurt (DE); Khalil, Tark, 99423 Weimar (DE)
(74) Vertreter: Finger, Catrin

(57) **Zusammenfassung**

Die Erfindung betrifft Zinkoxid-Partikel mit einer mittleren Partikelgröße im Bereich von 5 nm bis 100 nm, wobei der jeweilige Zinkoxid-Partikel einen Kern mit einem kohlenstoffhaltigen Rückstand mit einem Kohlenstoffanteil des Kerns im Bereich von 0.2 Gew.-% bis 4 Gew.-% bezogen auf den Zinkoxid-Partikel und mit einem elementaren Kohlenstoffanteil von größer 0.1 Gew.-% bezogen auf den Kohlenstoffanteil des Zinkoxid-Partikels aufweist.

## Beschreibung

Die Erfindung betrifft Zinkoxid-Partikel, Zinkoxid-Pulver sowie Dispersionen und deren Verwendung.

Zinkoxid (kurz ZnO) mit einer molaren Masse von 81,39 g/mol ist typischerweise ein weißes, lockeres Pulver mit einer Dichte von 5,65 g/cm³ bis 5,68 g/cm³. Es kristallisiert in der so genannten Wurtzitstruktur. In Wasser ist es unlöslich, in Säuren und Alkalien löst es sich unter Salzbildung.

Zinkoxid ist ein technisches Produkt und wird in großem Umfang in unterschiedlichsten Anwendungen eingesetzt. Die Eigenschaften und die Wirkung der eingesetzten Zinkoxide werden dabei maßgeblich von den Partikeleigenschaften, wie beispielsweise Partikelgröße, Partikelgrößenverteilung, Farbe, Kristallinität, Agglomerationsgrad, Verunreinigung, Dotierung usw., bestimmt.

Bei nanoskaligen Partikeln, definiert durch eine mittlere Partikelgröße in allen drei Raumdimensionen von kleiner 100 nm, ändert sich das Verhältnis von Oberfläche zum Volumen der Partikel deutlich. Durch die extrem großen Oberflächen dieser Materialien werden neue Eigenschaften der Produkte generiert. Die Verwendung von nanoskaligen Partikel eröffnen zum einen den Weg zu Anwendungen, die mit größeren Partikeln nicht realisierbar wären, wie beispielsweise der UV-Schutz in Transparentanwendungen; zum anderen ermöglichen sie erhebliche Effektivitätssteigerungen in Anwendungsfeldern, bei denen es auf möglichst große Oberflächen und eine homogene Verteilung der aktiven Materialien ankommt. Im Nanobereich werden zudem Effekte der Quantenmechanik sichtbar, beispielsweise ändern sich magnetische, elektronische, optische, thermo-dynamische oder thermische Eigenschaften sprunghaft.

Im Stand der Technik sind zahlreiche Herstellungsmethoden zur Generierung von Zinkoxid bekannt. Zur Herstellung von feinteiligen Pulvern, insbesondere nanoskaliger Pulver, haben sich im Wesentlichen die folgenden Herstellungsverfahren etabliert: chemische Herstellung in Lösungen (z. B. Sol-Gel-Methode), Herstellung im Plasma (z. B. Plasmareaktor), Herstellung aus der Gasphase (Aerosolprozess). Beim nasschemischen Verfahren wird von gereinigten Zinksalz-Lösungen ausgegangen, in denen durch Zugabe von Alkalien, Zinkhydroxid oder Zinkcarbonat ausgefällt wird. Diese Niederschläge werden kalziniert; es entsteht Zinkoxid mit größeren Oberflächen (> 10 m²/g). Bekannt ist weiterhin, dass nanoskalige Pulver in einem pulsierenden Heißgasstrom hergestellt werden können, wobei geeignete Rohstoffmischungen in den pulsierenden Heißgasstrom eingesprüht werden und sich die Partikel im pulsierenden Heißgasstrom aus den Reagenzien im Tropfen bildeten.

Aus der DE 10 2006 051 635 A1 und der EP 1 508 599 A1 sind oberflächenrnodifizierte Zinkoxide bekannt, welche Zinkoxidprimärpartikel aufweisen, die teilweise oder vollständig von einem Aggregat umhüllt sind, das einen Kohlenstoffgehalt von 0.4 Gew.-% bis 1.5 Gew.-% aufweist, wodurch diese Zinkoxide eine hohe Dispergierbarkeit in kosmetischen Formulierungen aufweisen.

Der vorliegenden Erfindung liegt die Aufgabe zugrunde, ein nanoskaliges Zinkoxid (ZnO) zur Verfügung zu stellen, welches einfach in eine Dispersion zu überführen ist, wobei die Primärpartikel weitestgehend desagglomeriert in der Dispersion vorliegen. Darüber hinaus sollen ein besonders geeignetes Zinkoxid-Pulver sowie eine Dispersion mit einem solchen Zinkoxid-Pulver bereitgestellt werden.

Die Aufgabe hinsichtlich des Zinkoxids wird erfindungsgemäß gelöst durch die in den nebengeordneten Patentansprüchen 1, 2 und 3 angegebenen Merkmale gelöst. Die Aufgabe hinsichtlich des Zinkoxid-Pulvers wird erfindungsgemäß durch die in den nebengeordneten Patentansprüchen 6, 7 und 8 angegebenen Merkmale gelöst. Die Aufgabe hinsichtlich der Dispersion wird durch die im Patentanspruch 9 angegebenen Merkmale gelöst.

Vorteilhafte Ausgestaltungen der Erfindung sind Gegenstand der Unteransprüche.

Die erfindungsgemäßen Zinkoxid-Partikel weisen eine mittlere Partikelgröße im Bereich von 5 nm bis 100 nm mit einer spezifischen Oberfläche (nach BET-Methode) von 20 m²/g bis 120 m²/g auf,
bevorzugt eine mittleren Partikelgröße von 10 nm bis 50 nm und eine spezifischen Oberfläche (nach BET-Methode) von 30 bis 70 m²/g, besonders bevorzugt mit eine mittleren Partikelgröße von 15 nm bis 25 nm und eine spezifischen Oberfläche (nach BET-Methode) von 40 bis 70 m²/g, wobei der jeweilige Zinkoxid-Partikel einen Kern mit einem kohlenstoffhaltigen Rückstand mit einem Kohlenstoffanteil des Kerns im Bereich von 0.2 Gew.-% bis 4 Gew.-% bezogen auf den Zinkoxid-Partikel, bevorzugt im Bereich von 0.5 Gew.-% bis 2 Gew.-%, besonders bevorzugt von 1 Gew.-% bis 1.5 Gew.-% und einen elementaren Kohlenstoffanteil von größer 0.1 Gew.-% bezogen auf den Zinkoxid-Partikels aufweist.

Alternativ weisen erfindungsgemäße Zinkoxid-Partikel eine mittlere Partikelgröße im Bereich von 5 nm bis 100 nm mit einer spezifischen Oberfläche (nach BET-Methode) von 20 m²/g bis 120 m²/g auf, bevorzugt eine mittlere Partikelgröße von 10 nm bis 50 nm und eine spezifische Oberfläche (nach BET-Methode) von 30 bis 70 m²/g, besonders bevorzugt eine mittlere Partikelgröße von 15 nm bis 25 nm, wobei der jeweilige Zinkoxid-Partikel einen Kern mit einem kohlenstoffhaltigen Rückstand mit einem Kohlenstoffanteil des Kerns im Bereich von > 1 Gew.-% bis 4 Gew.-% bezogen auf den Zinkoxid-Partikel, bevorzugt im Bereich von größer 1 Gew.-% bis 2 Gew.-%, besonders bevorzugt von größer 1 Gew.-% bis 1.5 Gew.-% und einen elementaren Kohlenstoffanteil von kleiner 0.1 Gew.-% bezogen auf den Kern aufweist.

In einer weiteren Alternative weisen erfindungsgemäße Zinkoxid-Partikel eine mittlere Partikelgröße im Bereich von 5 bis 100 nm mit einer spezifische Oberfläche (nach BET-Methode) von 20 m²/g bis 100 m²/g auf, bevorzugt eine mittlere Partikelgröße von 10 nm bis 50 nm und eine spezifische Oberfläche (nach BET-Methode) von 30 bis 70 m²/g, besonders bevorzugt mit eine mittlere Partikelgröße von 15 nm bis 25 nm und eine spezifische Oberfläche (nach BET-Methode) von 40 bis 70 m²/g, wobei der jeweilige Zinkoxid-Partikel einen Kern mit einem nicht-organischen kohlenstoffhaltigen Rückstand mit einem Kohlenstoffanteil des Kerns im Bereich von 0.2 Gew.-% bis 4 Gew.-% bezogen auf den Zinkoxid-Partikel aufweist, bevorzugt im Bereich von 0.5 Gew.-% bis 2 Gew.-%, besonders bevorzugt von 1 Gew.-% bis 1.5 Gew.-%.

Der erfindungsgemäße kohlenstoffhaltige Rückstand bildet dabei mit dem Zinkoxid eine feste Struktur, so dass die in einem nachfolgend beschriebenen thermischen Herstellungsverfahren gebildeten Zinkoxid-Partikel sowohl Zinkoxid als auch den kohlenstoffhaltigen Rückstand umfassen. Der Erfindung liegt dabei die Idee zugrunde, dass der Kern der Zinkoxid-Partikel selbst aus den mindestens zwei Komponenten - Zinkoxid und kohlenstoffhaltiger Rückstand - besteht gegenüber der aus dem Stand der Technik bekannten Oberflächenbeschichtung mit einem kohlenstoffhaltigen Rückstand von Zinkoxid-Partikeln. Mit anderen Worten: Gegenüber der kohlenstoffhaltigen Oberflächenbeschichtung aus dem Stand der Technik liegen bei den erfmdungsgemäßen Zinkoxid-Partikeln beide Komponenten im Partikel, also auch insbesondere im Partikelkern selbst nebeneinander vor, wobei der kohlenstoffhaltige Rückstand zum Teil vom gebildeten Zinkoxid eingeschlossen sein kann.

Durch die Bereitstellung eines solchen erfmdungsgemäßen nanoskaligen Zinkoxid mit einer mittleren Partikelgröße (d₅₀) von 5 nm bis 100 nm und einer spezifischen BET-Oberfläche von 20 m²/g bis 120 m²/g, wobei das Zinkoxid einen Kohlenstoffgehalt von 0.2 Gew.-% bis 4 Gew.-% aufweist, kann das Zinkoxid durch bekannte Dispergierverfahren in eine Dispersion, insbesondere in eine Suspension überführt werden, wobei die Partikel in der Suspension mit einer mittleren Sekundärpartikelgröße von kleiner 100 nm, bevorzugt kleiner 50 nm und besonders bevorzugt kleiner 30 nm vorliegen. Die so hergestellte Suspension eignet sich besonders für den Einsatz in transparenten Anwendungen, wie beispielsweise klare oder transparente Lacken, in Polymeren oder Polymerfolien, Kleb- und Dichtstoffe, Plaste oder auch in Sonnencreme usw.

Der erfindungsgemäße kohlenstoffhaltige Rückstand kann organische und/oder anorganische kohlenstoffhaltige Komponenten umfassen. Als organische kohlenstoffhaltige Rückstand werden vorzugsweise alle Verbindungen des Kohlenstoffs mit anderen Elementen mit Ausnahme von Kohlenstoffdioxid, Kohlenstoffmonoxid, Kohlensäure und ihre Carbonaten sowie Cyaniden, Isocyaniden, Cyanaten und Isocyanaten von Metallen verstanden. Die beschriebenen Ausnahmen sowie elementarer Kohlenstoff (in der Modifikation Diamant, Graphit, Fullerene, Kohlenstoffnanoröhren oder ADNR.) bzw. amorpher Kohlenstoff (hier sind die Atome ohne langreichweitige Ordnung vernetzt) wird als anorganischer gebundener oder anorganischer Kohlenstoff verstanden. Entsprechend umfasst der anorganische kohlenstoffhaltige Rückstand diese Komponenten. Dabei kann der anorganische und/oder organische kohlenstoffhaltige Rückstand auch weitere nicht-kohlenstoffhaltige Verbindungen enthalten. Der Gesamtkohlenstoffanteil gibt die Summe an organisch und/oder anorganisch gebundenen und/oder vorliegenden Kohlenstoff an.

Überraschenderweise wurde festgestellt, dass das erfindungsgemäße Zinkoxid in einem pulsierenden oder nicht-pulsierenden Heißgasstrom hergestellt werden kann, wobei eine zinkhaltige Rohstofflösung in feinverteilten Tropfen in den pulsierenden oder nicht-pulsierenden Heißgasstrom eingebracht wird und sich aus den Tropfen die festen Partikel bilden. Ein pulsierende Heißgasstrom wird dabei mit einer gleichmäßigen Schwingungsfrequenz im Bereich von größer 10 Hz und mit einer Druckamplitude von größer 5 mbar definiert. Reaktoren zur Herstellung feinteiliger Pulver im pulsierenden Heißgasstrom sind beispielsweise aus DE102006046803A1 in Form von Pulsationsreaktoren bekannt. Reaktoren mit nicht-pulsierendem Heißgasstrom, wie zum Beispiel Heißwandreaktoren, Sprüh- oder Spraypyrolysereaktoren, Heißgas-Reaktoren etc., sind beispielsweise aus WO2000/078672A1 bekannt. Für die Herstellung der erfindungsgemäßen Zinkoxide und insbesondere von Zinkoxid-Pulver sind alle Reaktoren geeignet, bei denen eine zinkhaltige Rohstoffmischung in einen Heißgasstrom eingebracht werden kann, wobei die Temperatur des Heißgasstroms am Aufgabeort der Rohstoffmischung weniger als 1200°C, bevorzugt weniger als 1000°C, besonders bevorzugt weniger als 800°C aufweist.

Durch die Auswahl geeigneter Prozessparameter, wie Verweilzeit, Prozesstemperatur etc., können die Partikeleigenschaften definiert eingestellt werden. So kann beispielsweise durch die Einstellung der maximalen Prozesstemperatur und der Verweilzeit der Partikel im thermischen Reaktor der Grad der Aggregation und die Primärpartikelgröße eingestellt werden.

Dabei entstehen in thermischen Prozessen typischerweise Aggregate, da durch hohe Prozesstemperaturen eine teilweise oder vollständige Sinterung des Materials eintritt. Als Sinterung wird dabei die Ausbildung einer partiellen Teilschmelze verstanden. Die notwendige Prozesstemperatur zum Beginn der Sinterung ist dabei abhängig von der Partikelgröße. Generell gilt, je kleiner die Partikelgröße je niedriger ist die Sintertemperatur. Mit Sinterung ist ein Partikelwachstum verbunden. Steigt der partielle Schmelzanteil an, bildet sich ein pyroplastischer Zustand der Partikel aus, wobei zusammenliegende oder - stoßende Partikel einen festen Verbund eingehen. Bei der Abkühlung bilden die zusammengelagerten Partikeln ein Aggregat, wobei die Oberflächen fest verwachsen sind. Festgestellt wurde nun, dass durch die Reduzierung der Prozesstemperatur der Grad der Aggregation des nanoskaligen erfmdungsgemäßen Zinkoxids abnimmt. Als Aggregate werden im Sinne der Erfindung Teilchen bezeichnet, die sich aus mehreren Primärpartikeln zusammensetzen, wobei die Primärpartikel flächig miteinander verwachsen sind. Unter einem Agglomerat versteht man hingegen einen Verband von Primärpartikeln oder Aggregaten, die über anziehende Kräfte, wie zum Beispiel Wasserstoffbrücken-Bindungen oder van-der-Waals-Kräfte, zusammengehalten werden. Als Primärpartikel bezeichnet man die kleinsten Teilchen, die bei der Herstellung der Pulver anfallen. Primärpartikel können in Form einzelner Kristallite oder aber in Form mehrerer dicht über Flächen miteinander verwachsener Kristallite vorliegen.

Das beschriebene Herstellungsverfahren im pulsierenden oder nicht-pulsierenden Heißgasstrom bietet dazu die Möglichkeit die Prozesstemperatur im Bereich von 200°C bis 1400°C definiert einzustellen und unterscheidet sich dabei grundsätzlich von anderen thermischen Herstellungsverfahren wie Verbrennung im Flammenprozess (auch als Pyrolyse bekannt) oder Herstellung in Plasmareaktoren.

Beim Herstellungsverfahren im pulsierenden oder nicht-pulsierenden Heißgasstrom werden Ausgangsrohstoffe oder -gemische, typischerweise in Form von Lösungen oder Dispersionen, zu Oxiden umgewandelt, wobei das verwendete Lösungsmittel entweicht oder verbrennt und mögliche Rohstofibestandteile durch die thermische Zersetzungsreaktionen von den Oxidbestandteilen abgetrennt werden. Thermische Zersetzungsreaktionen könnten dabei das Abtrennen von Bestandteilen durch Calcinationsprozesse, beispielsweise die thermische Zersetzung von Salzen, oder das Verbrennen von organischen Komponenten, beispielsweise metallorganischen Rohstoffkomponenten, sein. Wird beispielsweise eine wässrige Zinksalzlösung eingesetzt, entweicht zunächst das Wasser aus den eingedüsten Tropfen, wobei sich feste Zinksalzpartikel bilden, die sich durch die weitere thermische Behandlung zu Zinkoxid durch Abspaltung der Salzkomponente bilden.

Zur vollständigen Umwandlung der zinkhaltigen Rohstoffinischung in Zinkoxid werden entsprechend hohe Temperaturen, zum Beispiel oberhalb 1000°C benötigt. Bei diesen hohen Prozesstemperaturen bilden sich jedoch die beschriebenen harten Aggregate aufgrund von Sintererscheinungen. Zur Vermeidung dieser wurde in vorteilhafter Ausgestaltung der Erfindung die Prozesstemperatur reduziert, wodurch der Grad der Aggregation sinkt und keine vollständige Umsetzung mehr zum Zinkoxid erfolgt. Hierdurch verbleiben Rückstände der Rohstoffkomponenten (dazu zählen hier auch alle Komponenten der eingesetzten Rohstoffmischung, wie beispielsweise verwendeten Lösungsmittel oder Additive, wie Dispergierhilfsmittel, Emulgatoren etc.) bzw. thermische Zersetzungsprodukte aus diesen Komponenten, wie beispielsweise elementarer Kohlenstoff, als Rückstand. Der Anteil des Rückstandes ist dabei prinzipiell abhängig von der Prozesstemperatur. Sinkt die Prozesstemperatur steigt der Anteil an verbleibenden Rückstand.

Bei dem Rückstand kann es sich um nicht umgewandelte Rohstoffkomponenten der um Zwischenprodukte bei der thermischen Umwandlung von Rohstoffkomponenten bis hin zum elementaren Kohlenstoff handeln. Die Art des verbleibenden Rückstands hängt von den eingesetzten Rohstoffkomponenten und der Prozessführung ab und kann prinzipiell in einen organischen und/oder anorganischen (d. h. nicht-organischen) Rückstand unterteilt werden.

Ein organischer Rückstand verbleibt, wenn organische Rohstoffkomponenten nicht oder nicht vollständig thermisch zersetzt werden. Ein organischer Rückstand kann entsprechend die organischen Rohstoffkomponente oder deren Zersetzungsprodukte bzw. Zwischenprodukte, zum Beispiel Crackprodukte, davon beinhalten.

Werden anorganische Rohstoffkomponenten nicht oder nicht vollständig im thermischen Prozess zersetzt, verbleibt ein anorganischer Rückstand. Als anorganischer Rückstand gilt auch elementarer Kohlenstoff, der sich beispielsweise aus organischen kohlenstoffhaltigen Komponenten bilden kann, zum Beispiel durch Crackprozesse. Stellt die Rohstoffinischung ein Gemisch aus organischen und anorganischen Komponenten dar, können sich folglich entweder ein rein organischer, ein rein anorganischer oder ein organischer-anorganischer Rückstand bilden.

Reines aus Zinkoxid-Partikeln gebildetes Zinkoxid-Pulver ist zunächst typischerweise weiß. Der erfindungsgemäß vorgesehene kohlenstoffhaltige Rückstand in den Zinkoxid-Partikeln kann jedoch zu einer Verfärbung des Zinkoxid-Pulvers führen. Zur Erzeugung der Zinkoxid-Partikel mit kohlenstoffhaltigem Rückstand im Kern werden beispielsweise kohlenstoffhaltige Rohstoffmischungen eingesetzt, zum Beispiel Zinkacetat, Zinkcarbonat, metallorganische Zinkkomponenten oder organische Lösungsmittel. Dabei führt die unvollständige thermische Umwandlungsreaktion beispielsweise zu einer Graufärbung des Zinkoxids. Durch zum Beispiel sich gebildeten elementaren Kohlenstoff tritt dann diese Graufärbung ein. Durch andere Rückstandskomponenten kann eine andere Einfärbung erfolgen. Erfindungsgemäß wurde jedoch festgestellt, dass eine gewisse Art und ein gewisser Anteil an diesen kohlenstoffhaltigen Rückstandskomponenten sowie die möglicherweise resultierende Graufärbung zu keiner Beeinträchtigung bei dem Einsatz des so hergestellten Zinkoxids in den Anwendungen führt, wenn anschließend eine gute Dispergierung erreicht werden kann. Eine gute Dispergierung kann dabei erreicht werden, wenn der Grad der Aggregation der gebildeten Zinkoxid-Partikel möglichst gering ist. Durch eine erfindungsgemäße Reduzierung der Prozesstemperatur bei der Herstellung der Zinkoxid-Partikel gelingt eine solche Reduzierung des Grades der Aggregation, wobei eine unvollständige Umsetzung zum Zinkoxid resultiert und vernachlässigbar ist.

Der Grad der Aggregation ist nur schwer analytisch fassbar. Prinzipiell kann der Grad der Aggregation über den Anteil des eingesetzten Zinkoxids bestimmt werden, das nicht wieder in seine Primärpartikel aufgebrochen werden kann bzw. in der betreffenden Dispersion nicht aufgebrochen vorliegt. Die Art der Dispergierung, besonders die dabei eingebrachte Energie beispielsweise bei der Nassvermahlung, beeinflussen jedoch die Resultate, wobei ein einheitliches oder genormtes Dispergierverfahren hierzu nicht vorliegt. Aussagen aus der visuellen Untersuchung, zum Beispiel im Transelektronenmikroskop, können nur schwer abgeleitet werden, da zum einen nur geringe Bereiche untersucht werden und zum anderen nur schwer zwischen Agglomeration und Aggregation unterschieden werden kann. Empirisch wurde jedoch ermittelt, dass durch das beschriebene Herstellungsverfahren zur Generierung des erfindungsgemäßen Zinkoxids bei einem definierten Anteil an verbleibenden kohlenstoffhaltigem Rückstand keine harten Aggregate mehr nachweisbar sind. Dieser verbleibende kohlenstoffhaltige Rückstand im erfindungsgemäßen Zinkoxid ohne harte Aggregate ist analytisch gut fassbar und spiegelt den überraschenderweise gefundenen Zusammenhang zwischen Prozesstemperatur, Anteil des kohlenstoffhaltigen Rückstands und Grad der Aggregation wieder.

Erfindungsgemäß wurde festgestellt, dass durch die Einstellung eines definierten Temperaturbereichs die harten Aggregate aufgrund einsetzender Sinterung der Partikel im thermischen Reaktor weitgehend verhindert werden, wobei der verbleibende Anteil von Rückständen in den Zinkoxid-Partikeln bei diesem Temperaturbereich keine signifikanten Beeinträchtigungen in der Anwendung hervorruft. Erfindungsgemäß wird dies erreicht, wenn die Art des verbleibenden Rückstands Kohlenstoff aufweist. Gefunden wurden, dass sich folgende Zusammensetzungen besonders gut eignen:
- Zinkoxid-Partikel, die einen anorganischen-gebundenen kohlenstoffhaltigen Rückstand aufweisen, wobei der Gesamtkohlenstoffanteil im Bereich von 0.2 Gew.-% bis 4 Gew.-% bezogen auf die Zinkoxid-Partikel, bevorzugt im Bereich von 0.5 Gew.-% bis 2 Gew.-%, besonders bevorzugt von 1 Gew.-% bis 1.5 Gew.-%, wobei der Rückstand die Zinkoxid-Partikel nicht umhüllt, sondern vielmehr selbst Bestandteil der Zinkoxid-Partikel, insbesondere der Kerne ist.
- Zinkoxid-Partikel, die einen anorganischen und/oder organischen kohlenstoffhaltigen Rückstand aufweisen, wobei der Gesamtkohlenstoffanteil im Bereich von 0.2 Gew.-% bis 4 Gew.-% bezogen auf die Zinkoxid-Partikel, bevorzugt im Bereich von 0.5 Gew.-% bis 2 Gew.-%, besonders bevorzugt 1 Gew.-% bis 1.5 Gew.-% und davon der elementare Kohlenstoffanteil größer 0.1 % ist, wobei der Rückstand die Zinkoxid-Partikel nicht umhüllt, sondern vielmehr selbst Bestandteil der Zinkoxid-Partikel, insbesondere der Kerne ist.
- Zinkoxid-Partikel, die einen organischen kohlenstoffhaltigen Rückstand aufweisen, wobei der Gesamtkohlenstoffanteil im Bereich von > 1 Gew.-% bis 4 Gew.-% bezogen auf die Zinkoxid-Partikel, bevorzugt im Bereich von 0.5 Gew.-% bis 2 Gew.-%, besonders bevorzugt 1 Gew.-% bis 1.5 Gew.-% und davon der elementare Kohlenstoffanteil kleiner 0.1 Gew.-% bezogen auf den Gesamtkohlenstoffanteil ist, wobei der Rückstand das Zinkoxid nicht umhüllt.

Als typische Farbwerte können dazu L*=83 bis 99, a*=0 bis 4 und b*= 0 bis 8 angegeben werden.
Die Farbe des Pulvers wurde mit einem Luci 100 Spektrales Farbmessgerät (Dr. Bruno Lange GmbH) mit Messgeometrie d/8° und Ulbrichtes Kugel, 100 mm Durchmesser in Anlehnung an DIN 5033 bestimmt.

Ein weiterer Vorteil der Herstellung von nanoskalige Zinkoxid bei diesem Herstellungsverfahren ist, dass keine chlorhaltige Lösungsmittel oder chlorhaltigen Rohstoffkomponenten nötig sind. Im Vergleich dazu werden oft Dichloromethane für nasschemische Fällungsprozesse oder zinkchlorithaltige Rohstoffe in anderen thermischen Verfahren eingesetzt, wobei das resultierende ZnO dann oft unerwünscht Reste von chlorhaltigen Komponenten aufweist. Diese chlorhaltigen Restkomponenten sind in vielen Anwendungen unerwünscht und mindern zum Teil die Einsatzbreite und Wirkung in der Anwendung. Durch den möglichen Verzicht auf chlorhaltige Rohstoffkomponenten kann ein erfindungsgemäßes ZnO ohne chlorhaltige Rückstände generiert werden.

Eine Weiterbildung der Erfindung sieht vor, dass die Zinkoxid-Partikel eine Dotierung, insbesondere Kerne mit mindestens einer Dotierungskomponente mit einem Anteil im Bereich von 0,01 Gew.-% bis 5 Gew.-% bezogen auf die Zinkoxid-Partikel und mit einem kohlenstoffhaltigen Rückstand mit einem Kohlenstoffanteil der Kerne im Bereich von 0.2 Gew.-% bis 4 Gew.-% bezogen auf die Zinkoxid-Partikel aufweisen. Unter Dotierung wird dabei das gezielte Einbringen von Fremdatomen in eine Kristallstruktur verstanden. Als Dotierungskomponenten für Zinkoxid eignen sich insbesondere Metall-Ionen mit einem Elektron mehr oder einem Elektron weniger auf der äußeren Schale. Besonders geeignet sind Haupt- und Nebengruppenmetalle in der Oxidationsstufe+III. Ganz besonders bevorzugt sind Bor, Aluminium, Gallium und Indium. Eine Dotierung mit Edelmetallen wie beispielsweise Palladium, Platin, Gold, Silber etc. ist ebenfalls möglich. Dazu werden der zinkhaltigen Rohstoffmischung die Dotierungskomponenten in flüssiger oder fester Form, bevorzugt im gelösten Zustand, zugegeben, wobei die Dotierungskomponenten dabei in unterschiedlichen Verbindungen, zum Beispiel als Salze, metallorganische Verbindungen, Oxide, Nitrite usw., zugegeben werden können. Beispielsweise können die Dotierungskomponenten in Form löslicher Salze zugesetzt werden, wobei zum Beispiel anorganische Salze oder auch Komplexe in Betracht kommen, wie Carbonate, Halogenide, Salze mit EDTA, Nitrate, Acetylacetonat usw. Die Rohstoffkomponenten für die Dotierungskomponenten werden dabei so ausgewählt, dass nach der thermischen Behandlung die gewünschte Modifikation vorliegt. Die Rohstoffmischung einschließlich der Dotierungskomponenten wird anschließend wie oben beschrieben in einen pulsierenden oder nicht-pulsierenden Heißgasstrom aufgegeben, wobei sich dort die festen dotierten Partikel bilden. Der Prozess wird dabei so gesteuert, dass die Dotierungskomponenten weitestgehend in der gewünschten Modifikation vorliegen, beispielsweise so, dass überflüssige Salzkomponenten aus dem Rohstoff abgetrennt werden und die erfindungsgemäß dotierte Zinkoxid-Partikel ebenfalls einen Gesamtkohlenstoffgehalt von 0.2 Gew.-% bis 4 Gew.-% aufweisen. Die Dotierungskonzentration der Zinkoxid-Partikel kann bis zu 5 Gew.-% betragen.

Gegenstand der Erfindung ist entsprechend ein Zinkoxid-Pulver mit Zinkoxid-Partikel mit einer mittleren Partikelgröße von 5 nm bis 100 nm und einer spezifischen Oberfläche (nach BET-Methode) im Bereich von 20 m²/g bis 100 m²/g, bevorzugt mit einer mittleren Partikelgröße von 10 nm bis 50 nm und einer spezifischen Oberfläche (nach BET-Methode) von 30 bis 70 m²/g, besonders bevorzugt mit einer mittleren Partikelgröße von 15 nm bis 25 nm und einer spezifischen Oberfläche (nach BET-Methode) von 40 bis 70 m²/g, wobei der jeweilige Zinkoxid-Partikel einen Kern mit mindestens einer Dotierungskomponente mit einem Anteil im Bereich von 0,01 Gew.-% bis 5 Gew.-%, bevorzugt im Bereich 0,1 Gew.-% bis 3 Gew.-%, besonders bevorzugt im Bereich von 0,1 Gew.-% bis 2 Gew.-% und einen kohlenstoffhaltigen Rückstand mit einem Kohlenstoffanteil des Kerns im Bereich von 0.2 Gew.-% bis 4 Gew.-% bezogen auf die Zinkoxid-Partikel, bevorzugt im Bereich von 0.5 Gew.-% bis 2 Gew.-%, besonders bevorzugt von 1 Gew.-% bis 1.5 Gew.-% aufweist.

Eine weitere Ausführungsform der Erfindung sieht vor, dass die Zinkoxid-Partikel zusätzlich mit einer anorganischen und/oder organischen Beschichtung umhüllt sind.

In einer bevorzugten Ausführungsform erfolgt dazu eine ein- oder mehrstufige In-Situ-Beschichtung der im pulsierenden oder nicht-pulsierenden Heißgasstrom gebildeten, erfmdungsgemäßen dotierten oder undotierten nanoskaligen Zinkoxid-Partikel. Dabei ist bei einer geeigneten Wahl des Prozessablaufes sowohl eine rein anorganische Beschichtung als auch eine organische Beschichtung bzw. eine Kombination aus beiden möglich. Die Flexibilität in der pulsierenden bzw. nicht-pulsierenden Heißgaserzeugung und der Gestaltung des Reaktionsraumes bieten umfangreiche Einstellmöglichkeiten der Prozessparameter und somit die Möglichkeit unterschiedliche Beschichtungsformen, beispielsweise Schichtdicke oder Modifikation der Beschichtung, zu realisieren. Durch die Prozesssteuerung, beispielsweise durch die Prozesstemperatur am Zuführungspunkt, der Verweilzeit und/oder der Wahl der Edukte, kann die gewünschte Beschichtungsform realisiert werden. Zunächst erfolgt die Bildung der erfmdungsgemäßen Zinkoxid-Partikel im pulsierenden oder nicht-pulsierenden Heißgasstrom, die die erfindungsgemäße Partikelgröße von 5 nm bis 100 nm und einen Kohlenstoffgehalt von 0.2 Gew.-% bis 4 Gew.-% aufweisen. Die Zinkoxid-Partikelbeschichtung erfolgt in dieser bevorzugten Ausführungsform noch im Heißgasstrom, zwischen Partikelbildungsort und Filtersystem, die In-Situ-Beschichtung der Zinkoxid-Partikel durch das Einbringen einer Beschichtungsmischung, wobei der Heißgasstrom zuvor gekühlt oder weiter erhitzt werden kann. Für die einstufige oder mehrstufige Beschichtung der Partikel kann die Beschichtungsmischung gasförmig in den Reaktor eingeleitet und/oder durch feines Zerstäuben einer Lösung, Suspension oder Dispersion eingebracht werden. Bei Durchführung einer mehrstufigen Beschichtung können gleiche und/oder verschiedene Beschichtungsmischungen in gleichen und/oder unterschiedlichen Aggregatzuständen an gleichen und/oder unterschiedlichen Stellen im Reaktor eingesetzt werden. Die Prozessführung bei gasförmiger Zuführung der Beschichtungsmischung ist so zu steuern, dass entweder am Aufgabeort oder im weiteren Verlauf des Heißgasstroms eine zumindest partielle Kondensation der gas%rmigen Beschichtungskomponenten oder von deren Reaktionsprodukten und dadurch eine zumindest partielle Beschichtung der Partikel erfolgt.

In einer weiteren bevorzugten Ausführung werden dazu die ZnO - Partikel nachträglich, heißt nicht im thermischen Herstellungsprozess des ZnO im pulsierenden oder nicht-pulsierenden Heißgasstrom, mit einer Beschichtung versehen. Dazu wird eine Beschichtungsmischung, gegebenenfalls mit weiteren Hilfskomponenten wie Lösungsmittel, Dispergiermittel etc., über dem Fachmann bekannte Verfahren homogen auf das ZnO-Pulver aufgebracht, wobei die Beschichtungsdicke an die Art der Anwendung angepasst werden kann. Gegebenenfalls kann vor dem aufbringen der Beschichtung ein Benetzen der ZnO-Partikel, beispielsweise durch Wasser, oder ein thermischer Nachbehandlungsschritt nach der Beschichtung, zum Beispiel bei 100 - 200°C in einem thermischen Reaktor, im Anschluss an die Beschichtung erfolgen. In einer besonders bevorzugten Ausführungsform handelt es sich bei der Beschichtung um ein oder mehrere Silanisierungsmitteln (z. B. Silane), besonders bevorzugt um chemisch gebundene lineare und/oder verzweigte Alkylsilylgruppen.

Ein weiterer Gegenstand der Erfindung ist eine Dispersion mit Zinkoxid-Partikel mit einer mittleren Sekundärpartikelgröße im Bereich von 5 nm bis 100 nm, bevorzugt im Bereich 5 nm bis 50 nm, besonders bevorzugt im Bereich 10 nm bis 30 nm vorliegen. Zusätzlich kann die Dispersion mit weiteren oxydischen Partikeln versehen sein.

In einer möglichen Ausführungsform ist die Dispersion eine wässrige Suspension mit einem erfindungsgemäßen Zinkoxid-Pulver mit einer mittleren Sekundärpartikelgröße im Bereich von 5 nm bis 100 nm, bevorzugt im Bereich 5 nm bis 50 nm, besonders bevorzugt im Bereich 10 nm bis 30 nm, wobei die wässrige Suspension einen Zinkoxid-Anteil im Bereich von 1 Gew.-% bis 65 Gew.-%, bevorzugt 10 Gew.-% bis 50 Gew.-%, besonders bevorzugt 20 Gew.-% bis 40 Gew.-% aufweist.

Alternativ kann die Dispersion eine nicht-wässrige Suspension, beispielsweise eine ethanolische Suspension, mit einem erfindungsgemäßen Zinkoxid-Pulver sein.

Als wesentliches Merkmal der Suspension wird die Partikelgröße der dispergierten Partikel in der Suspension angesehen. Diese Partikelgröße wird im Sinne der ErFmdung als Sekundärpartikelgröße bezeichnet und beschreibt Primärpartikel, Aggregate und Agglomerate, wie sie in der Suspension vorliegen. Im Gegensatz zur alleinigen Angabe der Primärpartikelgröße gibt die Angabe der Sekundärpartikelgröße die reale Situation in der Suspension wieder.

Der Einsatz des erfindungsgemäßen nanoskaligen Zinkoxids, als Partikel und Pulver sowie Dispersion, mit kohlenstoffhaltigem Rückstand erscheint besonders aufgrund der möglichen Kombination von Langzeit-UV-Schutz und Transparenz interessant, wobei das erfindungsgemäße Zinkoxid einige Vorteile gegenüber anderen UV-Filtern bietet. Der Markt für UV-Filter wird derzeit noch von organischen Produkten dominiert, da oft hohe Anforderungen an die Transparenz gegeben sind. Als ideal werden häufig farblose Substanzen angesehen, die Eigenschaften aufweisen, die bisher mit anorganischen Substanzen nicht erfüllt werden konnten. Nanoskalige anorganische UV-Absorber sind jedoch auf dem Vormarsch, weil Sie neben einer hohen Transparenz den Vorteil der Langzeitbeständigkeit bieten. Der UV-Schutz des erfmdungsgemäßen Zinkoxids ist im Gegensatz zu organischen Absorbern, deren Wirkung zeitabhängig deutlich sinkt, langzeitstabil. Zudem deckt das Absorptionsspektrum des erfmdungsgemäßen Zinkoxids, anders als TiO₂ weitgehend den UV-C- bis UV-A-Bereich ab und kann damit als Breitbandfilter eingesetzt werden. Zusätzlich sind TiO₂-Absorber oft stark photokatalytisch aktiv. Dies kann zur Zersetzung anderer Produktkomponenten fuhren.

Entscheidend für die Wirkungsweise und die Transparenz in der Produktmatrix ist jedoch, inwieweit die nanoskaligen Zinkoxid-Pulver in die Produktmatrix agglomeratfrei bzw. aggregatfrei dispergiert werden können. Als Aggregate werden im Sinne der Erfindung Teilchen bezeichnet, die sich aus mehreren Primärpartikeln zusammensetzen, wobei die Primärpartikel flächig miteinander verwachsen sind. Unter einem Agglomerat versteht man hingegen einen Verband von Primärpartikeln oder Aggregaten, die über anziehende Kräfte, wie zum Beispiel Wasserstoffbrücken-Bindungen oder van-der-Waals-Kräfte, zusammengehalten werden. Als Primärpartikel bezeichnet man die kleinsten Teilchen, die bei der Herstellung der Pulver anfallen. Primärpartikel können in Form einzelner Kristallite oder aber in Form mehrerer dicht über Flächen miteinander verwachsener Kristallite vorliegen.

Gröbere Partikel in Suspensionen oder der Produktmatrix absorbieren beziehungsweise reflektieren die Strahlung breit und relativ gleichbleibend über den gesamten UV-Bereich und den Bereich des sichtbaren Lichtes, während feinteiligere Partikel eine deutliche Wirkungserhöhung im UV-Bereich bei gleichzeitigem Wirkungsverlust im langwelligen UV-A und insbesondere im sichtbaren Bereich zeigt. Da nur noch wenig sichtbares Licht reflektiert wird, sind Präparate auf dieser Wirkstoffbasis daher weitgehend transparent. Überraschenderweise wurde festgestellt, dass entscheidend für die Wirkung dabei die vorliegende Agglomerat- bzw. Aggregatgröße in der Matrix (zum Beispiel Suspension) und nicht die Primärpartikelgröße des Zinkoxids ist.

In der Anwendungsmatrix, besonders bei transparenten Anwendungen ist es wichtig, dass die Partikel möglichst klein sind und desagglomeriert und unaggregiert vorliegen. Zu diesem Zweck werden die agglomerierten und/oder aggregierten nanoskaligen erfmdungsgemäßen Zinkoxid-Partikel dispergiert. Unter Dispergieren wird insbesondere das Einbringen, Zerteilen und gleichmäßige Verteilen von Feststoffen in einer flüssigen Phase verstanden. Eine Dispersion ist ein Gemenge aus mindestens zwei Stoffen, die sich nicht oder kaum ineinander lösen oder chemisch miteinander verbinden. Dabei wird eine Komponente (dispergierte Phase oder disperse Phase) möglichst fein in einem anderen Stoff (Dispersionsmittel oder Dispergens) verteilt. Eine Suspension ist ein heterogenes Stoffgemisch aus einer Flüssigkeit und darin fein verteilten Feststoffen, die in der Flüssigkeit mit geeigneten Aggregaten (Rührer, Dissolver, Nassmühle) sowie meist mit Hilfe zusätzlicher Dispergiermittel aufgeschlämmt und in der Schwebe gehalten werden. Eine Suspension ist eine grobdisperse Dispersion, somit ein Spezialfall der Dispersion.

Darüber hinaus geht die Erfindung von der Überlegung aus, dass mit sinkender Partikelgröße die Anforderungen an die Dispergierung zunehmen. Die Forderungen der Praxis gehen daher dahin, diesen Teil von der Herstellung der eigentlichen Formulierungen oder Einbindung in die Anwendung zu trennen und stabile Dispersionen mit möglichst hohem Gehalt an nanoskaligen Partikeln bereitzustellen, welche vorzugsweise niedrigviskos oder zumindest noch pumpbar oder fließfähig sein sollen. Dabei wird in den meisten Fällen zunächst eine Suspension hergestellt, die die desagglomerierten und stabilisierten nanoskaligen Partikel aufweist. Unter stabilisiert ist dabei zu verstehen, dass die Tendenz zur Neuagglomeration in der flüssigen Phase beispielsweise durch Modifizierung der Oberfläche unterbunden wird und das Absetzverhalten durch die Zugabe von geeigneten Additiven eingestellt wurde.

Als wesentliches Merkmal der Suspension wird die Partikelgröße der dispergierten Partikel in der Suspension angesehen. Diese Partikelgröße wird im Sinne der Erfindung als Sekundärpartikelgröße bezeichnet und beschreibt Primärpartikel, Aggregate und Agglomerate, wie sie in der Suspension vorliegen. Im Gegensatz zur alleinigen Angabe der Primärpartikelgröße gibt die Angabe der Sekundärpartikelgröße die reale Situation in der Suspension wieder.

Der Grad der Aggregation entscheidet maßgeblich darüber, in wieweit des Zinkoxid-Pulvers in Flüssigkeiten desagglomeriert werden kann. Hart verbundene Aggregate können technisch wenn überhaupt nur durch sehr hohen Energieeintrag, zum Beispiel durch Aufmahlung, wieder getrennt werden. Dabei sinkt jedoch die Kosteneffizienz deutlich und zusätzlich erhöht sich der Eintrag von Verunreinigungen durch den intensiven Mahlprozess. Deshalb ist bei den erfindungsgemäßen nanoskaligen Zinkoxid-Pulvern vorgesehen, dass der Grad der Aggregation möglichst niedrig ist bzw. keine harten Aggregate vorhanden sind.

Ein weiterer Gegenstand der Erfindung ist die Bereitstellung einer aus den erfindungsgemäßen Zinkoxid-Partikeln hergestellten Dispersion, insbesondere Suspension, bei der die Partikel weitestgehend desagglomeriert vorliegen.

Das Zerteilen der Agglomerate bzw. Aggregate sowie das Benetzen der neugeschaffenen Oberflächen ist prinzipiell mit Hilfe von Dispergiervorrichtungen, wie beispielsweise Dissolvern, Kugelmühlen, Rotor-Stator-Maschinen, möglich, wobei der Grad des Zerteilens von der eingebrachten Energie und der Wirkungsweise des Mühlaggregates abhängig ist. Zur Zerteilung der Agglomeration des erfindungsgemäßen Zinkoxid-Pulvers reicht der Energieeintrag einer handelsüblichen Kugelmühle aus.

Die Dispersion enthält 1 Gew.-% bis 60 Gew.-%, bevorzugt 10 Gew.-% bis 50 Gew.-%, besonders bevorzugt 20 Gew.-% bis 40 Gew.-% des erfindungsgemäßen Zinkoxid-Pulvers. Durch Hinzufügen der flüssigen Phase (Wasser und/oder organisches Flüssigkeit oder Flüssigkeiten) können beliebige Verdünnungen daraus hergestellt werden.

Die flüssige Phase der Dispersion kann Wasser, ein oder mehrere organische Flüssigkeiten oder eine wässrige/organische Kombination sein, wobei die Phasen mischbar oder emulgierbar, bei Bedarf durch Einsatz von Emulgierungsmittel, sind. Flüssige, organische Phasen können insbesondere Methanol, Ethanol, Aceton, Essigsäureethylester, Dimethylsulfoxid, Sulfolan, Tetrahydrofuran, Dioxan, Anisol, Chloriert Kohlenwasserstoffe wie Dichlormethan, Chloroform und Tetrachlorkohlenstoff, linear und zyklisch Siloxanen (z. B. Hexamethyldisiloxan, Hexamethyltrisiloxan, Octamethyldisiloxoan) obwohl auch Isomeren und Isomerengemisch von Alkoholen (z. B. Propanol, Butanol, Octanol, Cyclohexanol), Ketonen (z. B. Butanon, Cyclohexanon, Methyethylketon), Ethern wie Diethylether und Dibutylether, Glykole, Glykolesteren und andere Derivaten (z. B. Mono-, Di-, Tri- und Polyglycolether, Ethylenglycol, Diethylenglycol, Propylenglycol, Propylmethoxyacetat), stickstoffhaltigen Stoffe wie Dimethylacetamid, Dimethylformamid, Pyridin, N-Methylpyrrolidin, Acetonitril und Nitrobenzol, lineare, verzweigtere oder zyklisch Alkanen (z. B. Pentan, Hexan, Heptan, Octan, Cyclohexan, Methylcyclohexan, Dekalin), aromatische kohlenwasserstoffen (z. B. Benzol, Toluol, Xylole) und Dichloroethan, sein.

Technische Lösungsmittel, wie Benzine und Petrolether, können auch eingesetzt werden. Monomere, Oligomere und Polymere und Harze können auch als organische Flüssigkeit oder Teil der Flüssigkeit verwendet werden. Beispiele von Monomeren sind Styrol und Acrylaten (wie Hexanedioldiacrylat). Beispiele von Harzen sind Vinylesterharze, gesättigte und ungesättigte Polyesterharze, Acrylat- und Methacrylatpolymere und -ester, Siloxane, Alkyden, Polyurethane und Epoxyharze.

Besonders bevorzugte als organische, flüssige Phase sind Ethanol, n- und i-Propanol, Ethylenglycol, Hexan, Heptan, Hexanedildiacrylat, Toluol und o-, m- und p-Xylol. Die erfindungsgemäße Dispersion kann weiterhin Komponenten zur Regulierung des pH-Werts, oberflächenaktive Additive und/oder Konservierungsstoffe enthalten.

Bei der Dispergierung kann eine Oberflächenmodifikation, beispielsweise eine Silanisierung, erfolgen. Dazu werden geeignete Komponenten teilweise oder vollständig an der Oberfläche der nanoskaligen Zinkoxid-Partikel angebracht. Derartige Komponenten zur Modifizierung der Oberfläche können beispielsweise Wasserstoff-, Hydroxo-, Halogen- oder Alkoxyorganosilane des Types X₃SiR, X₂SiRR', X(R'_{)2S}SiR,R'R" (mit X = H, OH, Cl, Br, Methoxy, Ethoxy, Propoxy, Butoxy, Acetoxy; R = H, Amino, Epoxy, Acryl, Alkyl, Alkenyl, Aminoalkyl, Phenyl, Epoxyalkyl; Acryloalkyl; R' = H, Amino, Epoxy, Acryl, Alkyl, Alkenyl, Aminoalkyl, Phenyl, Epoxyalkyl; Acryloalkyl; R" = H, Amino, Epoxy, Acryl, Alkyl, Alkenyl, Aminoalkyl, Phenyl, Epoxyalkyl, Acryloalkyl;), Silazane des Types RR'R"Si-NH-SiRR'R" mit R, R' und R" wie oben wobei die R Gruppen (und auch die R" und R" Gruppen) auf unterschiedlichen Siliziumatome auch unterschiedlich werden kann. Siloxane des Typs RR'R"Si(OSiR'R")ₙOSiRR'R" mit R, R' und R" wie oben aber R kann auch OH werden; und n = 1-20; zyklische Polysiloxane des Types RR'Si(OSiR'R")ₙOSiRR' mit R, R' und n wie oben. Andrere Typen von Oberflächenbehandlungsmittel sind Phosphonsäure und dessen Derivaten. Eine Oberflächenbehandlung kann auch mit im Wesentlich anorganischen Stoffen durchgeführt werden. Geeignete Mitteln sind z. B. Hydroxoaluminiumverbindungen, wie Aluminiumchlorohydrat und Polyaluminium Chlorid, Hydroxozirconiumsalzen und Alkalisilikat-Lösungen, wie Natrium Wasserglass. Anorganischen Hydroxoaluminium und Silicate Beschichtungen kann auch durch die Verwendung von Alkoxy Estern von Aluminium bzw. Silicon gebaut werden.

Der Oberflächenbehandlung kann als mehreren Schichten oder in mehrere Behandlungsschritte nacheinander durchgeführt werden.

Zusätzlich zu den genannten Komponenten kann die Dispergierung Basen und Säuren zur pH-Regulierung enthalten. Bevorzugt Basen sind Ammoniumhydroxid, Trimethylammoniumhydroxid und Ethanolamine. Bevorzugt Säuren sind Phosphorsäure, Schwefelsäure, Salzsäure, Salpetersäure oder Carboxysäuren.

Weiterhin kann die Dispergierung bekannte Hilfs- und Zusatzstoffe, wie Zitronensäure, Phophorsäure, Ethanol, Propanol, Butanol, Propylenglycol, Butylenglycol, Pentylenglycol, Hexylenglycol, Alkoxilate, Glykolether, Glykole, Polyethylenglykole, Polypropylenglykole, Polybutylenglykole, Glycerinesterethoxylate, Glycerin, Polyglycerin, Sorbitol, Sucrose, Fructose, Galctose, Mannose, Polysorbate, Stärke, Xanthan Gum, Carragennan Gum, Cellulose-Derivate, Alginate, Glycol Ester, Sorbitanester, Trübungsmittel, Solubilisatoren, ethoxylierte Fettalkohole, Natriumchlorid, Natriumsulfat, Magnesiumsulfat, Puffer-Systeme, Cholesterin, Panthothensäure, Ascorbinsäure, Polyacrylsäuren, Polymethacrylsäure, Carbomere enthalten.

Die erfindungsgemäße Dispersion kann je nach eingesetzte Additiven und dessen Konzentration im pH-Bereich von 4,5 bis 9,0 ein Zeta-Potential von kleiner als -20 mV oder größer als +20 mV aufweisen. Das Zetapotential ist das nach außen wirksame Potential der Teilchen und stellt ein Maß der elektrostatischen Wechselwirkung zwischen einzelnen Partikeln dar. Bei Werten von kleiner als -20 mV oder größerer als +20 mV weist die Dispersion eine besonders hohe Stabilität auf.

Die erfindungsgemäße Dispersion kann ferner eine Viskosität von weniger als 2000 mPa.s bei einer Scherrate von 100 s-1 aufweisen.

Die erfindungsgemäßen nanoskaligen Zinkoxid-Pulver und/oder Zinkoxid-Suspensionen werden insbesondere zum UV-Schutz verwendet. Eine typische Anwendung ist dabei in Polymeren. Dabei Schützen die Zinkoxid-Partikel entweder die Polymere selbst vor Abbau durch LTV-Strahlung. Oder die Polymerzubereitung enthaltend die Nanopartikel wird beispielsweise in Form einer Schutzfolie oder aufgebracht als Lackschicht wiederum als UV-Schutz für andere Materialien, wie beispielsweise Holz, eingesetzt. Polymere, in welche die erfindungsgemäßen Zinkoxid-Partikel, insbesondere in Form der erfindungsgemäßen Zinkoxid-Suspension, gut eingearbeitet werden können dabei insbesondere Polycarbonat (PC), Polyethylenterephthalat (PETP), Polyimid (PI), Polystyrol (PS), Polymethylmethacrylat (PMMA), Polyester, Siloxanharze oder Copolymere sein, die mindestens einen Anteil eines der genannten Polymere enthalten.

Dabei kann es sich bei den Polymeren auch um wässerige oder nicht wässerige Dispersionen von Polymeren, wie beispielsweise Lacke handeln. Im diesem Fall können Polymere und Harze wie Acrylatharze, Alkydharze, gesättigte oder ungesättigte Polyester, Polyurethan, Epoxyharze, Siloxanharze, und Hybrid- und Co-Polymeren davon eingesetzt werden. Je nach Formulierung können auch Pigmente, Trocknungsmittel, und Additiven Bestandteil des Systemes werden. Hier kann die Einarbeitung der erfindungsgemäßen nanoskaligen ZnO - Pulver bzw. ZnO-Suspensionen durch übliche Mischvorgänge erfolgen. Durch die gute Redispergierbarkeit der erfmdungsgemäßen Partikel wird gerade die Herstellung solcher Dispersionen erleichtert. Entsprechend sind Dispersionen der erfindungsgemäßen Partikel in Polymeren oder Lösungsmitteln als Dispergiermedium ein weiterer Gegenstand der vorliegenden Erfindung.

Die Einarbeitung der erfindungsgemäßen Zinkoxid-Partikel, insbesondere in Form der erfmdungsgemäßen Zinkoxid-Suspensionen, kann dabei durch übliche Methoden zur Herstellung von Polymerzubereitungen erfolgen. Beispielsweise kann das Polymermaterial mit erfindungsgemäßen Nanopartikeln, vorzugsweise in einem Extruder, Disolvern oder Kneter, vermischt werden. Je nach verwendetem Polymer können auch Kneter eingesetzt werden. Ein besonderer Vorzug der erfindungsgemäßen Partikel besteht dabei darin, dass zur homogenen Verteilung der Partikel in dem Polymer nur ein im Vergleich zu dem Stand der Technik geringer Energieeintrag erforderlich ist.

Weiter eignen sich die erfindungsgemäßen Polymerzubereitungen enthaltend die erfmdungsgemäßen Zinkoxid-Partikel insbesondere auch zur Beschichtung von Oberflächen. Damit lässt sich die Oberfläche bzw. das unter der Beschichtung liegende Material beispielsweise vor UV-Strahlung schützen.

Die erfindungsgemäßen Zinkoxid-Pulver und/oder Zinkoxid-Dispersionen werden außerdem vorzugsweise zur Herstellung kosmetischer Formulierungen, wie Make-up, colorierter Puder, Lippenstifte, Haarcolorierungsmittel, Tagescremes und insbesondere Sonnenschutzpräparaten, verwendet und können in den üblichen Formen, wie beispielsweise als W/O- oder O/W-Dispersionen (Emulsionen), Gele, Cremes, Lotionen, Sprays, vorliegen. Hier dient es als UV-Filter, vor allem von UV-A-Strahlung, die für die Hautalterung verantwortlich ist und krankhafte Hautveränderungen auslösen kann. Werden dabei Zinkoxid-Partikel mit einer mittleren Partikelgröße von 20 nm bis 50 nm eingesetzt, erscheinen die Sonnenschutzemulsionen transparent und dringen tiefer in die Haut ein. Teilweise kann durch den kombinierten Einsatz von Nano-Zinkoxid und Nano-Titandioxid eine Besonders gute Schutzwirkung erzielt werden.

Erfindungsgemäß werden die Zinkoxid-Pulver und/oder Zinkoxid-Dispersion als Vulkanisationsaktivatoren für die Vulkanisation von Latex-Formkörpern zur Herstellung von kosmetischen Formulierungen oder in Form von Beschichtungen, insbesondere als UV-Schutz für die beschichteten Materialien verwendet. Auch kann die Dispersion zur UV-Stabilisierung von Polymeren verwendet werden.

Des Weiteren findet das erfindungsgemäße Zinkoxid-Pulver bzw. die Zinkoxid-Suspension Anwendung in Hygiene-Produkten, als Biozid oder als geruchshemmende Additiv; in der Medizin als entzündungshemmende Bestandteil im Formulierungen und Pflaster; als Vulkanisationscoaktivator bei der Vulkanisation von Latexformkörpern und/oder Gummi, in der Elektronik als Rohstoff für Varistoren; als wärmeleitende Füllstoff für Wärmeleitendepasten; als Rohstoff für Keramik und Keramikbeschichtungen; als UV-Schutzstoff und/oder Biozid für Textilien und Beschichtungen dafür; sowie in Kühlschmierstoffen auf Grund seiner antiseptischen Wirkung als Ersatz für organische Biozide eingesetzt.

Das erfindungsgemäße ZnO-Pulver bzw. die ZnO-Suspension kann auch in anorganischeorganisch oder wesentlich anorganischen Formulierungen eingesetzt werden. Diese Formulierung, oft als Sol-Gel Systeme Bekannt, wird oft auf Silikat-Basis hergestellt, z. B. beim Einsatz von Natriumsilikaten und /oder Alkoxy Esteren von Silizium (und andere Metal oder Metalloiden) wie Tetraethylorthosilicat. und Solche Formulierungen werden als Beschichtungssystem z. B. für Textilien und Keramikgegenstände verwendet.

Zudem wird das Zinkoxid oder die Zinkoxid-Suspension in Anwendungen als Gassensoren und in Solarzellen eingesetzt. In dünne Filme aufgetragen können sie in Flachbildschirmen, Dioden, in Raumtemperaturlasern und als transparente, leitfähige und piezoelektrische Komponenten sowie als Ersatz von TiO₂ in Elektroden von Grätzel-Photozellen verwendet werden.

### Beispiele 1)

Die Rohstofflcomponente Zinkacetat wird in Wasser als Lösungsmittel unter Erwärmen (40°C bis 60°C) gelöst, so dass die resultierende Rohstoffmischung RM in Form einer Rohstofflösung einen Metallgehalt von 10 % Zn aufweist. Diese warme Rohstoffinischung RM wird bei einem Durchsatz von 20 kg/h mit Hilfe einer Schlauchpumpe in einen pulsierenden HGS eines Pulsationsreaktors (bekannt aus DE102006046803A1) am Anfang des Resonanzrohrs bezogen auf den HGS direkt hinter der Brennkammer über eine 1,8 mm Titandüse fein eingestäubt und thermisch behandelt.

### Reaktor-Parameter:

- Temperatur am Aufgabeort der Rohstofflösung : 600°C
- Schwingungsfrequenz Ausgang Brennkammer 1 : 25 Hz
- Druckamplitude Ausgang Brennkammer 1 : < 10 mbar

Vor Eintritt in die Abscheideinrichtung 4 wird der die gebildeten Partikel P enthaltende Heißgasstrom HGS durch Zufuhr von Kühlluft KL am Kühlluftzuführungspunkt 5.6 auf ca. 160 °C abgekühlt. Als Abscheideinrichtung 4 zum Abtrennen der feinteiligen Partikel P aus dem Heißgasstrom HGS wird ein Kassettenfilter verwendet.

Die ZnO-Partikel P weisen eine Korngröße von d₅₀= 18 nm, eine sphärische Partikelform und eine spezifische Oberfläche (BET) von 60 m²/g, eine champagner Farbe (L*=87,30; a*=1,64; b*=6,28) auf. Die C_{ges}-Konzentration des ZnO-Pulvers beträgt 1,1 %.

Die Partikel P weisen keine Agglomeration aufgrund von Sintererscheinungen (z. B. Sinterhalsbildung) auf und können deshalb in Lösungsmitteln wie beispielsweise Wasser oder organischen Lösungsmittels, eventuell unter Zugabe von Additiven (z. B. Dispergierhilfsmittel) zu einer stabilen agglomeratfreien Suspension dispergiert werden.

### Beispiel 2)

Es wird eine zinkhaltige Rohstofflösung aus 200 1 Wasser, 34 kg Eisessig, 34 kg ZnO und 1,9 kg Aluminiumnitrat-9-hydrat (Al(NO₃)₃*9H₂O) unter Rühren und Erwärmen (40 - 60°C) hergestellt. Diese warme Rohstoffmischung RM wird bei einem Durchsatz von 20 kg/h mit Hilfe einer Schlauchpumpe in einen pulsierenden HGS eines Pulsationsreaktors (bekannt aus DE102006046803A1) am Anfang des Resonanzrohrs bezogen auf den HGS direkt hinter der Brennkammer über eine 1,8 mm Titandüse fein eingestäubt und thermisch behandelt.

### Reaktor-Parameter:

- Temperatur am Aufgabeort der Rohstofflösung : 650°C
- Schwingungsfrequenz Ausgang Brennkammer 1 : 25 Hz
- Druckamplitude Ausgang Brennkammer 1 : 10 mbar

Vor Eintritt in die Abscheideinrichtung 4 wird der die gebildeten Partikel P enthaltende Heißgasstrom HGS durch Zufuhr von Kühlluft KL am Kühlluftzuführungspunkt 5.6 auf ca. 160 °C abgekühlt. Als Abscheideinrichtung 4 zum Abtrennen der feinteiligen Partikel P aus dem Heißgasstrom HGS wird ein Kassettenfilter verwendet.

Die ZnO-Partikel P weisen eine Al-Dotierung von 0,4 %, eine Korngröße von d₅₀= 22 nm, eine sphärische Partikelform und eine spezifische Oberfläche (BET) von 50 m²/g, eine champagner Farbe (L*=87,29; a*=1,18; b*=1,93) auf. Die C_{ges}-Konzentration des ZnO-Pulvers beträgt 0,6 %.

Die Partikel P weisen keine Agglomeration aufgrund von Sintererscheinungen (z. B. Sinterhalsbildung) auf und können deshalb in Lösungsmitteln wie beispielsweise Wasser oder organischen Lösungsmittels, eventuell unter Zugabe von Additiven (z. B. Dispergierhilfsmittel) zu einer stabilen agglomeratfreien Suspension dispergiert werden.

### Beispiel 3)

Die Rohstoffkomponente Zinkacetat wird in Wasser als Lösungsmittel unter Erwärmen (50°C bis 70°C) gelöst, so dass die resultierende Rohstoffmischung RM in Form einer Rohstofflösung einen Metallgehalt von 12 % Zn aufweist. Diese warme Rohstoffmischung RM wird bei einem Durchsatz von 20 kg/h mit Hilfe einer Schlauchpumpe in einen nicht - pulsierenden eines Heißgasreaktor (Sprühpyrolysereaktor), über eine 1,8 mm Titandüse in den Heißgasstrom HGS fein eingestäubt und thermisch behandelt. Zwischen Brennkammer 1 und Reaktionsraum R2 wird Kühlluft KL zugegeben.

### Reaktor-Parameter:

- Temperatur am Aufgabeort der Rohstofflösung : 700°C
- Schwingungsfrequenz Ausgang Brennkammer 1 : < 5 Hz
- Druckamplitude Ausgang Brennkammer 1 : < 3 mbar

Vor Eintritt in die Abscheideinrichtung 4 wird der die gebildeten Partikel P enthaltende Heißgasstrom HGS durch Zufuhr von Kühlluft KL am Kühlluftzuführungspunkt 5.6 auf ca. 160 °C abgekühlt. Als Abscheideinrichtung 4 zum Abtrennen der feinteiligen Partikel P aus dem Heißgasstrom HGS wird ein Kassettenfilter verwendet.

Die ZnO-Partikel P weisen eine Korngröße von d₅₀= 28 nm, eine sphärische Partikelform und eine spezifische Oberfläche (BET) von 40 m²/g, eine champagner Farbe (L*=93,73; a*=0,07; b*=4,01) auf. Die C_{ges}-Konzentration des ZnO-Pulvers beträgt 0,21 %.

Die Partikel P weisen keine Agglomeration aufgrund von Sintererscheinungen (z. B. Sinterhalsbildung) auf und können deshalb in Lösungsmitteln wie beispielsweise Wasser oder organischen Lösungsmittels, eventuell unter Zugabe von Additiven (z. B. Dispergierhilfsmittel) zu einer stabilen agglomeratfreien Suspension dispergiert werden.

In einer Ausführungsform wird auf das so hergestellte ZnO-Pulver kann zusätzlich ein Silanisierungsmittel aufgebracht, indem das ZnO-Pulver in einen Mischer vorgelegt wird, gegebenenfalls mit Wasser benetzt wird und anschließend das Silanisierungsmittel aufgesprüht wird. Nach 15 Minuten intensiver Mischung wird das so beschichtete ZnO-Pulver im Ofen getempert.

### Beispiel 4)

In einem Rührgefäß werden 500 g der nanoskaligen ZnO-Partikel aus Beispiel 1 (Primärpartikelgröße d₅₀ = 18 nm, spezifische Oberfläche = 60 m²/g), 750 g (VE-) Wasser, 250g Isopropoxyethanol und 15 g Aminopropoxytrimethoxysilan gegeben und durch intensiv Rühren eine ZnO-Suspension hergestellt.

Eine Mühle (Netzsch Labstar LS1) wird mit Wasser im Kreislauf gefahren. Dazu wird schrittweise die oben beschriebene ZnO-Suspension zugeführt. Die Mühle wird mit 0,1 mm ZrO₂-Mahlkugel und einem Füllungsgrad von 75 %, einer Rotordrehzahl von 2000 U/min und einer Pumpendrehzahl von 30 U/min betrieben. Die Mühle wird in der Weise für 9 Stunden betrieben.

Es resultiert eine 20 %ige wässrige ZnO-Suspension bei der die Sekundärpartikelgröße (d₅₀) bei 18 nm liegt. Die ZnO-Suspension ist über mehrere Tage vollständig stabil (es setzen sich keine Partikel ab und bilden einen Bodensatz) und der sich absetzende Bodensatz (Bildung nach mehreren Wochen) kann dann leicht wieder aufgeschüttelt werden. Nach 1 Woche Standzeit weist die ZnO-Suspension eine Sekundärpartikelgröße von 18 nm auf, nach vier Wochen von 19 nm.

Die Suspension bietet einen zuverlässigen UV-Schutz und zeichnet sich durch eine hohe Transparenz im sichtbaren Wellenlängenbereich aus. Damit eignen sich die hergestellten ZnO Partikel beispielsweise zum Einsatz als UV-Schutz in transparente Lacke und Farben (wie beispielsweise Klarlacke), Plaste, Gummi und Kautschuk. In Gummi und Kautschuk eignet sich die hohe Oberfläche auch als Vulkanisierungshilfe.

### Beispiel 5)

In einem Rührgefäß werden 750 g der nanoskaligen ZnO-Partikel aus Beispiel 1 (Primärpartikelgröße d₅₀ = 18 nm, spezifische Oberfläche = 60 m²/g), 750 g Ethanol, 375g Isopropoxyethanol und 22,5 g Aminopropoxytrimethoxysilan gegeben und durch intensiv Rühren eine ZnO-Suspension hergestellt.

Eine Mühle (Netzsch Labstar LS1) wird mit Ethanol im Kreislauf gefahren. Dazu wird schrittweise die oben beschriebene ZnO-Suspension zugeführt. Die Mühle wird mit 0,1 mm ZrO₂-Mahlkugel und einem Füllungsgrad von 75 %, einer Rotordrehzahl von 2000 U/min und einer Pumpendrehzahl von 30 U/min betrieben. Die Mühle wird in der Weise für 9 Stunden betrieben.

Es resultiert eine 20 %ige ethanolische ZnO-Suspension bei der die Sekundärpartikelgröße (d₅₀) bei 18 nm liegt. Die ZnO-Suspension ist über mehrere Tage vollständig stabil (es setzen sich keine Partikel ab und bilden einen Bodensatz) und der sich absetzende Bodensatz (Bildung nach mehreren Wochen) kann dann leicht wieder aufgeschüttelt werden.

Die Suspension bietet einen zuverlässigen UV-Schutz und zeichnet sich durch eine hohe Transparenz im sichtbaren Wellenlängenbereich aus. Damit eignen sich die hergestellten ZnO Partikel beispielsweise zum Einsatz als UV-Schutz in transparente Lacke und Farben (wie beispielsweise Klarlacke), Plaste, Gummi und Kautschuk. In Gummi und Kautschuk eignet sich die hohe Oberfläche auch als Vulkanisierungshilfe.

## Patentansprüche

1. Zinkoxid-Partikel mit einer mittleren Partikelgröße im Bereich von 5 nm bis 100 nm, wobei der jeweilige Zinkoxid-Partikel einen Kern mit einem kohlenstoffhaltigen Rückstand mit einem Kohlenstoffanteil des Kerns im Bereich von 0.2 Gew.-% bis 4 Gew.-% bezogen auf den Zinkoxid-Partikel und mit einem elementaren Kohlenstoffanteil von größer 0.1 Gew.-% bezogen auf den Zinkoxid-Partikel aufweist.

2. Zinkoxid-Partikel mit einer mittleren Partikelgröße im Bereich von 5 nm bis 100 nm, wobei der jeweilige Zinkoxid-Partikel einen Kern mit einem kohlenstoffhaltigen Rückstand mit einem Kohlenstoffanteil des Kerns im Bereich von > 1 Gew.-% bis 4 Gew.-% bezogen auf den Zinkoxid-Partikel und mit einem elementaren Kohlenstoffanteil von kleiner 0.1 Gew.-% bezogen auf den Kern aufweist.

3. Zinkoxid-Partikel mit einer mittleren Partikelgröße im Bereich von 5 bis 100 nm, wobei der jeweilige Zinkoxid-Partikel einen Kern mit einem kohlenstoffhaltigen Rückstand mit einem Kohlenstoffanteil des Kerns im Bereich von 0.2 Gew.-% bis 4 Gew.-% bezogen auf den Zinkoxid-Partikel aufweist, wobei der Kohlenstoff in nicht-organisch gebundener Form vorliegt.

4. Zinkoxid-Partikel nach einem der vorhergehenden Ansprüche 1 bis 3, wobei der jeweilige Zinkoxid-Partikel einen Kern mit mindestens einer Dotierungskomponente mit einem Anteil im Bereich von 0,01 Gew.-% bis 5 Gew.-% bezogen auf den Zinkoxid-Partikel und mit einem kohlenstoffhaltigen Rückstand mit einem Kohlenstoffanteil des Kerns im Bereich von 0.2 Gew.-% bis 4 Gew.-% bezogen auf den Zinkoxid-Partikel aufweist.

5. Zinkoxid-Partikel nach einem der vorhergehenden Ansprüche 1 bis 4, **dadurch gekennzeichnet, dass** die Zinkoxid-Partikel zusätzlich mit einer anorganischen und/oder organischen Beschichtung umhüllt sind.

6. Dispersion mit Zinkoxid-Partikel nach einem der vorhergehenden Ansprüche, **dadurch gekennzeichnet, dass** die Zinkoxid-Partikel mit einer mittleren Sekundärpartikelgröße im Bereich von 5 nm bis 100 nm, bevorzugt im Bereich 5 nm bis 50 nm, besonders bevorzugt im Bereich 10 nm bis 30 nm vorliegen.

7. Dispersion nach Anspruch 6,
**gekennzeichnet durch** zusätzlich weitere oxydische Partikel.

8. Dispersion nach Anspruch 6 oder 7,
**gekennzeichnet durch** eine wässrige Suspension mit einem Zinkoxid-Pulver nach Anspruch 1 bis 5, wobei die Dispersion einen Zinkoxid-Anteil im Bereich von 1 Gew.-% bis 65 Gew.-% enthält.

9. Dispersion nach Anspruch 9 oder 10,
**gekennzeichnet durch** eine nicht-wässrige Suspension mit einem Zinkoxid-Pulver nach Anspruch 1 bis 5, wobei die Dispersion einen Zinkoxid-Anteil im Bereich von 1 Gew.-% bis 65 Gew.-% enthält.

10. Verwendung der Zinkoxid - Pulver und/oder der Zinkoxid - Dispersion nach einem der vorhergehenden Ansprüche in Hygiene-Produkten, als Biozid oder als geruchshemmende Additiv; in der Medizin als entzündungshemmende Bestandteil im Formulierungen und Pflaster; als Vulkanisationsaktivatoren für die Vulkanisation von Latex-Formkörpern und/oder Gummi, zur Herstellung von kosmetischen Formulierungen, in der Elektronik als Rohstoff für Varistoren; als wärmeleitende Füllstoff für Wärmeleitendepasten; als Rohstoff für Keramik und Keramikbeschichtungen; als UV-Schutzstoff und/oder Biozid für Textilien und Beschichtungen dafür; in Kühlschmierstoffen auf Grund seiner antiseptischen Wirkung als Ersatz für organische Biozide oder in Formulierungen zur Beschichtungen von Materialien, insbesondere als UV-Schutz für die Materialien.

11. Verwendung der Zinkoxid - Pulver und/oder der Zinkoxid - Dispersion nach einem der vorhergehenden Ansprüche zur UV-Stabilisierung von Polymeren.
